Europäisches Patentamt

European Patent Office

Office européen des brevets

(11) Numéro de publication: **0 060 898**

**B1**

(12) **FASCICULE DE BREVET EUROPEEN**

(45) Date de publication du fascicule du brevet: **04.12.85**

(21) Numéro de dépôt: **81902842.4**

(22) Date de dépôt: **04.08.81**

(86) Numéro de dépôt international:
**PCT/RO81/00003**

(87) Numéro de publication internationale:
**WO 82/01446 29.04.82 Gazette 82/11**

(54) Moteur électrique frein asynchrone à rotor en court-circuit et à double action.

(30) Priorité: **30.09.80 RO 102247**

(43) Date de publication de la demande:
**29.09.82 Bulletin 82/39**

(45) Mention de la délivrance du brevet:
**04.12.85 Bulletin 85/49**

(84) Etats contractants désignés:
**CH DE FR LI SE**

(56) Documents cités:
**DE-A-2 738 542
DE-A-2 819 942
FR-A- 815 879
FR-A- 852 541
FR-A-1 128 071
FR-A-1 563 930
FR-A-2 211 789
FR-A-2 409 629
GB-A- 468 826
SU-A- 729 758
US-A-2 408 808
US-A-2 536 491
US-A-3 028 512**

(73) Titulaire: **INSTITUTUL DE CERCETARE PENTRU INDUSTRIA ELECTROTEHNICA-ICPE
Bd.Tudor Vladimirescu nr. 45-47, sect. 5
cod.76.134
Bucharest (RO)**

(72) Inventeur: **APETREI, Constantin
Str. Armeneasca nr. 17, sect. 1
Bucharest (RO)**
Inventeur: **NITIGUS, Victor Al. Arinului Dornei nr. 10
bl. M30, et. 8. ap. 30, sect. V
Bucharest (RO)**
Inventeur: **DEMETER, Elek
Prelungirea Ferentari nr. 52 bl. B, ap. 6, sect. V
Bucharest (RO)**
Inventeur: **RADULESCU, Marian Cal. Victoriei nr. 32-34
sc. D, et. 3, ap. 69, sect. I
Bucharest (RO)**
Inventeur: **SACHELARIE, Toma
Strasse Tohan No. 1 bl. 29, sc. A, ap. 22, et 5
Sector 4 cod. 75.128 Bucarest (RO)**

(74) Mandataire: **Chameroy, Claude
c/o Cabinet Malemont 42, avenue du Président Wilson
F-75116 Paris (FR)**

Courier Press, Leamington Spa, England.

## Description

La présente invention concerne un moteur électrique frein asynchrone à rotor en court-circuit et double action, du type comprenant un paquet statorique normal prolongé par un paquet statorique supplémentaire ayant le même nombre d'encoches, les deux paquets ayant l'enroulement d'excitation commun, un paquet rotorique normal avec des ailettes de ventilation seulement sur la région opposée au paquet statorique supplémentaire et une armature qui débloque le frein qui est fixée sur l'arbre à l'aide d'un roulement correspondant qui lui permet un déplacement axial, sans tourner avec l'arbre.

De tels moteurs sont décrits par exemple dans les documents GB—A—468 826 et US—A—3 028 512, mais ne donnent pas entière satisfaction car ils n'assurent pas toujours un maintien efficace de l'armature en position de déblocage de frein, en raison d'une mauvaise utilisation du champ magnétique engendré par le moteur. Ces moteurs ne permettent donc pas de réaliser des couples de freinage importants.

On connaît également des moteurs asynchrones frein à rotor conique dont le champ magnétique propre peut engendrer un couple de rotation ainsi qu'un mouvement axial du rotor qui débloque le frein. Ce type de moteur présente plusieurs inconvénients: une structure compliquée qui impose des technologies spéciales, l'emploi erroné du circuit magnétique, et le déplacement de l'arbre du moteur au moment du branchement et de la déconnexion. On connaît aussi le moteur-frein asynchrone dont la force électromagnétique qui débloque le frein est produite par le champ magnétique engendré par le courant qui parcourt la bague de court-circuitage du rotor. Le désavantage de ce type de moteur réside dans le fait que l'intensité de la force qui s'exerce sur l'armature qui débloque le frein diminue beaucoup jusqu'au moment où on réalise le nombre de tours qui permet le fonctionnement du moteur; la valeur finale de cette force est réduite et ne permet pas la réalisation d'un couple de freinage assez grand. Il existe aussi un moteur-frein asynchrone dont la force qui débloque le frein est engendrée par le champ magnétique inducteur du stator qui doit être plus long que le rotor, dont l'alésage au tour a une forme de cône où on introduit la zone active de l'armature qui débloque le frein qui peut se déplacer seulement le long de l'axe de l'arbre. Un tel moteur-frein est décrit par exemple dans le document FR—A—1 563 930. Les inconvénients de ce type de moteur sont: la longueur exagérée doublée d'un fonctionnement incertain dû au possible blocage de l'armature qui débloque le frein; l'armature pouvant se bloquer dans la portion où celle-ci joint l'arbre; l'armature subit aussi l'influence d'un couple de rotation. Presque tous les types de moteurs asynchrones, y compris ceux que nous avons déjà présentés, exploitent insuffisamment leur champ mangétique, fait qui influence leur gabarit.

## Exposé de l'invention

La présente invention élimine les inconvénients énumérés ci-dessus et est caractérisé en ce que l'armature qui débloque le frein possède deux surfaces actives, l'un en face du paquet rotorique, sous la bague de court-circuitage, et l'autre en face du paquet statorique supplémentaire, dans la zone centrale située à l'intérieur de l'enroulement d'excitation statorique.

Ainsi, grâce à l'action combinée du champ magnétique engendré par le courant circulant dans la bague de court-circuitage du rotor et du champ mangétique engendré par le stator dans la zone du paquet statorique supplémentaire, on assure une meilleure utilisation du champ magnétique du moteur engendrant la force électromotrice axiale pour débloquer le frein, ce qui permet d'obtenir des couples de freinage plus importants.

De préférence, le paquet statorique supplémentaire possède un nombre égal d'encoches se prolongeant à l'intérieur et qui sont séparées du prolongement correspondant des encoches, pour réduire la dispersion du champ magnétique et le diriger de façon à ce qu'il se ferme axialement à travers la zone active de l'armature qui débloque le frein et qui est située en face de la zone centrale du paquet statorique supplémentaire.

Selon une autre caractéristique, la région active de l'armature qui débloque le frein et qui est située en face de la zone centrale du paquet statorique supplémentaire, au-dessous de l'enroulement d'excitation statorique, est formée d'un tore réalisé par le roulage d'une tôle électrotechnique, pour favoriser la pénétration du champ magnétique et réduire les pertes par courants tourbillonnaires (courants de Foucault).

Selon encore une autre caractéristique, l'armature qui débloque le frein est munie de griffes qui sortent à l'extérieur du moteur par des orifices pratiqués dans le bouclier dans la direction du ventilateur et qui soutient l'une des pièces de frottement pressée axialement par des ressorts sur une autre pièce de frottement qui joue aussi le rôle de ventilateur, fixée sur l'arbre à l'aide d'un ajustement cylindrique glissant et d'une clavette. Le moteur qui fait l'objet de cette invention présente les avantages suivants:

— une bonne utilisation de son propre champ magnétique pour la génération simultanée du couple de rotation du rotor ainsi que de la force électomagnétique qui débloque le frein;

— la possibilité de réaliser un couple de freinage assez grand;

— une sécurité supérieure de fonctionnement grâce à l'élimination du déplacement axial de l'arbre et à la réalisation d'une bonne jonction entre l'arbre et l'armature qui débloque le frein qui permet le déplacement axial de cette armature sans qu'elle tourne avec l'arbre;

— dimensions de gabarit et poids réduits;

— temps de réponse réduits au blocage ainsi qu'au déblocage du frein;

— technologie d'exécution simplifiée;

— conditions favorables pour le dégagement de la chaleur correspondant au frottement;

— réglage extérieur simplifié de la valeur du couple de freinage;

— correction extérieure simplifiée de l'usure des matériaux de frottement.

Description sommaire des dessins

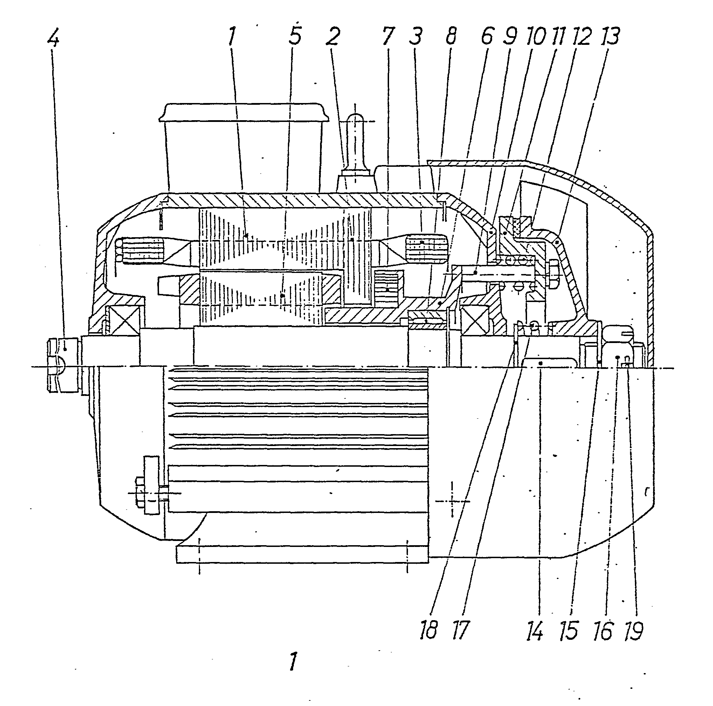

— la figure 1 est une section longitudinale à travers l'ensemble du moteur;

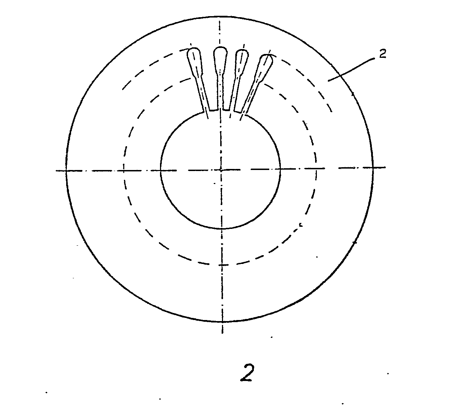

— la figure 2 est une section transversale à travers le paquet statorique supplémentaire.

L'invention présente un exemple de réalisation d'un moteur-frein asynchrone ayant le rotor en court-circuit et une double action.

Le moteur que nous décrivons est réalisé de manière qu'il permette l'utilisation complète du champ magnétique du moteur, le champ magnétique de la bague du court-circuitage du rotor se fermant sur le circuit formé d'une partie du paquet rotorique, qui est beaucoup plus court que le paquet statorique proprement dit, une partie du paquet statorique proprement dit, un paquet statorique supplémentaire ayant le même nombre d'encoches que le paquet statorique proprement dit et ayant les dents des encoches prolongées vers la zone centrale jusqu'au niveau du diamètre intérieur de la bague de court-circuitage et séparées par la même prolongation des proéminences des encoches, un entrefer axial situé entre cette zone centrale du paquet statorique supplémentaire et un tore en tôle électrotechnique incorporée dans l'armature mobile qui débloque le frein, une partie de l'armature qui débloque le frein et un entrefer axial entre cette dernière et la surface du paquet rotorique qui si trouve sous la bague du court-circuitage correspondant, s'accumulant dans l'entrefer situé entre la zone centrale du paquet statorique supplémentaire et le tore en tôle électrotechnique incorporé dans l'armature qui débloque le frein, avec le champ magnétique engendré par un enroulement d'excitation commun pour le paquet statorique proprement dit, ainsi que pour le paquet statorique supplémentaire, fait qui rend possible le cumul de l'effet du courant initial (de démarrage) de la bague de court-circuitage du rotor, qui engendre une force de choc qui attire rapidement l'armature qui débloque le frein, avec l'effet combiné des deux champs, le champ statorique et le champ du courant qui parcourt la bague de court-circuitage du rotor pour maintenir l'armature qui débloque le frein dans la position "attirée" même en présence d'une force intense engendrée par les ressorts qui bloquent le frein. L'armature qui débloque le frein possède la capacité de se déplacer axialement sans tourner avec l'arbre du moteur, étant fixée sur celui-ci à l'aide d'un roulement à bille correspondant. Le frein proprement dit est placé à l'extérieur de la machine et le réglage de la valeur du couple de freinage et la corrélation des effets de l'usure des matériaux de frottement se font à l'aide d'un écrou qui se visse sur l'axe du moteur. Le moteur décrit est formé d'un paquet statorique normal 1, dans lequel se trouve un paquet rotorique normal 5, plus court que le paquet statorique proprement dit 1, avec des ailettes de ventilation disposées seulement sur la partie opposée du paquet statorique supplémentaire 2, et de l'armature 6 qui débloque le frein, fixée sur l'arbre 4 à l'aide du roulement à aiguilles 8, qui rend possible le déplacement axial. La partie active de l'armature 6 qui débloque le frein, en face de la zone centrale du paquet statorique supplémentaire 2, est formée d'un tore 7 réalisé par le roulage d'une tôle électrotechnique.

L'armature mobile qui débloque le frein est munie de griffes 9 qui sortent à l'extérieur du moteur par les orifices pratiqués dans le bouclier 10. Les griffes 9 soutiennent l'une des pièces de frottement 11, qui est pressée par les ressorts 12 sur l'autre pièce de frottement 13, qui joue le rôle de ventilateur, cette dernière étant fixée sur l'arbre à l'aide d'un ajustement cylindrique glissant et de la clavette 14, et retenue pressée contre la rondelle 15 et l'écrou de réglage 16 par le ressort 17 qui s'appuie sur un épaulement de l'arbre 4 à l'aide de la rondelle 18. L'écrou de réglage 16 est du type écrou moleté dans lequel entre la goupille de blocage (d'arrêt) 19 qui transperce le bout de l'arbre 4 par un orifice radial. Lorsque l'enroulement statorique 3 n'est pas alimenté en énergie électrique, les ressorts 12 pressent la pièce de frottement 11 sur la pièce de frottement 13. Entre les surfaces de contact des pièces de frottement qui peuvent être planes comme dans la figure ou coniques, se produit la force de freinage qui bloque l'arbre 4. Lorsque l'enroulement statorique 3 est alimenté en énergie électrique sur l'armature 6 qui bloque le frein, par ses surfaces actives, l'une devant le paquet rotorique 5 sous la bague de court-circuitage et l'autre devant le paquet statorique supplémentaire 2, dans la zone centrale située à l'intérieur de l'enroulement statorique 3, le champ magnétique engendré par le courant qui traverse la bague de court-circuitage du rotor 5, et le champ magnétique engendré par l'enroulement statorique 3 dans la zone du paquet statorique supplémentaire 2, exerce une force d'attraction qui exerce une compression sur les ressorts 12, éloignant la pièce de frottement 11 de la pièce de frottement 13, et de cette manière la force de freinage est supprimée. Pour le réglage de la force de freinage on enlève la goupille 19 et on tourne l'écrou 16 qui en se vissant sur l'arbre 4 détermine un variation de la valeur du couple de freinage. Toujours par l'intermédiaire de l'écrou 16 et de la même manière, on peut supprimer l'effet de l'usure des matériaux de frottement par un réglage périodique.

**Revendications**

1. Moteur électrique frein asynchrone à rotor en court-circuit et double action, comprenant un paquet statorique normal (1) prolongé par un paquet statorique supplémentaire (2) ayant le même nombre d'encoches, les deux paquets ayant l'enroulement d'excitation commun (3), un paquet rotorique normal (5) avec des ailettes de ventilation seulement sur la région opposée au paquet statorique supplémentaire (2) et une armature (6) qui débloque le frein qui est fixée sur l'arbre (4) à l'aide d'un roulement correspondant (8) qui lui permet un déplacement axial, sans tourner avec l'arbre, caractérisé en ce que l'armature (6) qui débloque le frein possède deux surfaces actives, l'une en face du paquet rotorique (5), sous la bague de court-circuitage, et l'autre en face du paquet statorique supplémentaire (2), dans la zone centrale située à l'intérieur de l'enroulement d'excitation statorique (3).

2. Moteur électrique frein asynchrone conforme à la revendication 1, caractérisé par le fait que le paquet statorique supplémentaire (2) possède un nombre égal d'encoches se prolongeant à l'intérieur et qui sont séparées du prolongement correspondant des encoches pour réduire la dispersion du champ magnétique et le diriger de façon à ce qu'il se ferme axialement à travers la zone active de l'armature (6) qui débloque le frein et qui est située en face de la zone centrale du paquet statorique supplémentaire (2).

3. Moteur électrique frein asynchrone conforme aux revendications 1 et 2, caractérisé par le fait que la région active de l'armature (6) qui débloque le frein et qui est située en face de la zone centrale du paquet statorique supplémentaire (2), au-dessous de l'enroulement d'excitation statorique (3), est formée d'un tore (7) réalisé par le roulage d'une tôle électrotechnique, pour favoriser la pénétration du champ magnétique et réduire les pertes par courants tourbillonnaires (courants de Foucault).

4. Moteur électrique frein asynchrone conforme aux revendications 1, 2 et 3, caractérisé par le fait que l'armature (6) qui débloque le frein est munie de griffes (9) qui sortent à l'extérieur du moteur par des orifices pratiqués dans le bouclier (10) dans la direction du ventilateur et qui soutient l'une des pièces de frottement (11) pressée axialement par des ressorts (12) sur une autre pièce de frottement (13) qui joue aussi le rôle de ventilateur, fixée sur l'arbre (4) à l'aide d'un ajustement cylindrique glissant et d'une clavette (14).

5. Moteur électrique frein asynchrone conforme aux revendications 1 à 4, caractérisé par le fait que les ressorts (12) peuvent être remplacés par un seul ressort central placé autour de l'arbre (4) à l'extérieur du ressort (17) qui exerce la pression sur la pièce de frottement (13).

6. Moteur électrique frein asynchrone conforme aux revendications 1 à 5, caractérisé par le fait que les pièces de frottement (11 et 13) peuvent avoir les surfaces de frottement planes ou coniques.

7. Moteur électrique frein asynchrone conforme aux revendications 1 à 6, caractérisé par le fait qu'une pièce de frottement (13) est retenue et pressée axialement par une rondelle (15) et un écrou de réglage (16) par un ressort (17) qui appuie son autre bout sur un épaulement de l'arbre (4) par une rondelle (18), l'écrou de réglage (16) est du type écrou moleté où entre la goupille de blocage (d'arrêt) 19 qui transperce le bout de l'arbre (4) par un orifice radial.

**Patentansprüche**

1. Elektrischer Bremsasynchronmotor mit Kurzschlußläufer und Doppelwirkung, mit einem normalen Ständerpaket (1), das durch ein zusätzliches Ständerpaket (2) verlängert ist, welches dieselbe Nutzahl hat, wobei die beiden Pakete eine gemeinsame Erregerwicklung (3) haben, mit einem normalen Läuferpaket (5), das mit Belüftungsflügeln lediglich in dem zu dem zusätzlichen Ständerpaket (2) entgegengesetzten Bereich versehen ist, und mit einem Bremslüftanker (6), der auf der Welle (4) mit Hilfe eines entsprechenden Lagers (8) befestigt ist, das ihm gestattet, sich axial zu verschieben, ohne sich mit der Welle zu drehen, dadurch gekennzeichnet, daß der Bremslüftanker (6) zwei aktive Flächen besitzt, eine gegenüber dem Läuferpaket (5) unter dem Kurzschlußring und die andere gegenüber dem zusätzlichen Ständerpaket (2) in der zentralen Zone, welche sich im Innern der Ständererregerwicklung (3) befindet.

2. Elektrischer Bremsasynchronmotor nach Anspruch 1, dadurch gekennzeichnet, daß das zusätzliche Ständerpaket (2) eine gleiche Anzahl von Nuten besitzt, die innen verlängert sind und von der entsprechenden Verlängerung der Nuten getrennt sind, um die Streuung des magnetischen Feldes zu verringern und dieses so zu leiten, daß es sich durch die aktive Zone des Bremslüftankters (6) axial schließt, welcher gegenüber der zentralen Zone des zusätzlichen Ständerpakets (2) angeordnet ist.

3. Elektrischer Bremsasynchronmotor nach Anspruch 1, und 2, dadurch gekennzeichnet, daß der aktive Bereich des Bremslüftankers (6), welcher in der zentralen Zone des zusätzlichen Ständerpakets (2) unter der Ständererregerwicklung (3) angeordnet ist, aus einem Wickelkern (7) aus Elektroblech gebildet ist, um das Eindringen des Magnetfeldes zu begünstigen und Verluste durch Wirbelströme (Foucaultsche Ströme) zu verringern.

4. Elektrischer Bremsasynchronmotor nach den Ansprüchen 1, 2 und 3, dadurch gekennzeichnet, daß der Bremslüftanker (6) mit Klauen (9) versehen ist, die sich durch Öffnungen, welche in dem Lagerschild (10) in der Richtung des Ventilators gebildet sind, aus dem Motor hinaus erstrekken und eines der Reibstücke (11) tragen, welches durch Federn (12) axial auf ein anderes Reibstück (13) gepreßt wird, das außerdem den Ventilator bildet und auf der Welle (4) mit Hilfe eines zylindrischen Gleitsitzes und eines Keils (14) befestigt ist.

5. Elektrischer Bremsasynchronmotor nach den Ansprüchen 1 bis 4, dadurch gekennzeichnet, daß die Federn (12) durch eine einzelne zentrale Feder ersetzt sein können, welche um die Welle (4) außerhalb der Feder (17), die den Druck auf das Reibstück (13) ausübt, angeordnet ist.

6. Elektrischer Bremsasynchronmotor nach den Ansprüchen 1 bis 5, dadurch gekennzeichnet, daß die Reibstücke (11 und 13) ebene oder konische Reibflächen haben können.

7. Elektrischer Bremsasynchronmotor nach den Ansprüchen 1 bis 6, dadurch gekennzeichnet, daß ein Reibstück (13) durch eine Scheibe (15) und eine Einstellmutter (16) durch eine Feder (17) gehalten und axial angedrückt ist, die sich mit ihrem anderen Ende an einer Schulter der Welle (4) über eine Scheibe (18) abstützt, wobei die Einstellmutter (16) eine Rändelmutter ist, in die ine Haltestift (19) eindringt, welcher durch eine radiale Öffnung in dem Ende der Welle (4) hindurchgeführt ist.

## Claims

1. An asynchronous electric brake motor with short-circuited rotor and double action, comprising a normal stator package (1) extended by an additional stator package (2) having the same number of slots, the two packages having a common energization winding (3), a normal rotor package (5) with ventilation fins only on the region opposite the additional stator package (2) and an armature (6) which releases the brake which is fixed on the shaft (4) by means of a corresponding bearing (8) which allows axial movement thereof, without rotating with the shaft, characterized in that the armature (6) which releases the brake has two active surfaces, one facing the rotor package (5), under the short-circuiting ring, and the other facing the additional stator package (2), in the central zone situated inside the stator energization winding (3).

2. The electric asynchronous brake motor in accordance with claim 1, characterized by the fact that the additional stator package (2) has an equal number of slots extending inwardly which are separated from the corresponding extension of the slots for reducing dispersion of the magnetic field and directing it so that it is closed axially through the active zone of the armature (6) which releases the brake and which is situated opposite the central zone of the additional stator package (52).

3. The electric asynchronous brake motor according to claims 1 and 2, characterized by the fact that the active region of the armature (6) which releases the brake and which is situated opposite the central zone of the additional stator package (2), below the stator energization winding (3), is formed by a torus (7) formed by rolling an electrotechnical metal sheet, for promoting penetration of the magnetic field and reducing the losses due to swirling currents (eddy currents).

4. Electric asynchronous brake motor according to claims 1, 2 and 3, characterized by the fact that the armature (6) which releases the brake is provided with claws (9) which project outwardly of the motor through orifices formed in the casing (10) in the direction of the fan and which supports one of the friction pieces (11) pressed axially by springs (12) against another friction piece (13) which also plays the role of fan, fixed to the shaft (14) by a sliding cylindrical fit and a key (14).

5. Asynchronous electric brake motor according to claims 1 to 4, characterized by the fact that the springs (12) may be replaced by a single central spring placed about the shaft (4) outside the spring (17) which exerts the pressure on the friction piece (15).

6. Asynchronous electric brake motor according to claims 1 to 5, characterized by the fact that the friction pieces (11, 13) may have flat or tapered friction surfaces.

7. Asynchronous electric brake motor according to claims 1 to 6, characterized by the fact that a friction piece (13) is retained and pressed axially by a washer (15) and an adjustment nut (16) by a spring (17) which abuts at its other end on a shoulder of the shaft (4) through a washer (18), the adjustment nut (16) is of the knurled nut type where the locking (stop) pin 19 enters which transpierces the end of the shaft (4) through a radial orifice.

0 060 898

1

0 060 898

2